# FASCICULE DE BREVET EUROPEEN

(11) **EP 1 169 373 B1**
(45) Date de publication et mention de la délivrance du brevet: **30.07.2003**
(21) Numéro de dépôt: 00905147.5
(22) Date de dépôt: 16.02.2000
(51) Int. Cl.: C08J 7/04, B32B 17/10, C03C 17/34

(54) **MATERIAUX COMPOSITES CONTENANT UNE COUCHE D'UN FILM ANTICHOC**
VERBUNDMATERIALIEN MIT EINER SCHICHT AUS EINER ANTISTOSSFOLIE
COMPOSITE MATERIALS CONTAINING AN IMPACT-RESISTANT FILM

(30) Priorité: 26.02.1999 FR 9902397
(43) Date de publication de la demande: 09.01.2002
(73) Titulaire: Atofina, 92800 Puteaux (FR)
(72) Inventeur: Leibler, Ludwik, F-75016 Paris (FR); Meunier, Gilles, F-64230 Mazerolles (FR); Vuillemin, Bruno, 64140 Billere (FR); Verzaro, Francis, F-64121 Serres-Castet (FR); Boumera, Jean-Marc, F-64170 Serres-Sainte-Marie (FR)
(86) Numéro de dépôt international: FR0000381
(87) Numéro de publication internationale: WO00050496

(56) Documents cités:
- EP-A- 0 600 597
- EP-A- 0 661 306
- EP-A- 0 811 478
- FR-A- 2 767 835

## Description

L'invention se rapporte au domaine de matériaux composites et plus particulièrement aux matériaux composites comprenant sur au moins une de leurs surfaces une couche de primaire antichoc et au moins une couche de revêtement antiabrasion (antirayure) déposée sur la couche de primaire. La couche de primaire antichoc est formée à partir de particules de polymères dispersées dans l'eau. Le revêtement antirayure peut être constitué par exemple par un vernis photoréticulable ou thermoréticulable selon EP 0035609 ou WO 83/0125. Les matériaux composites visés par la présente invention sont destinés à diverses applications. A titre indicatif et non limitatif on peut en citer dans le bâtiment : le vitrage ; dans l'automobile : le vitrage ainsi que les glaces de phares ; dans le sanitaire : les bacs de douches, les baignoires.

Les matériaux composites connus voient leurs propriétés de résistance au choc altérées par la présence d'une couche dure en surface. Par ailleurs, dans certaines applications une bonne tenue aux solvants est demandée.

Il est bien connu que les matériaux composites destinés aux applications décrites précédemment sans la couche de primaire, sont peu résistants aux chocs et possèdent une résistance limitée à l'action des solvants lorsqu'ils sont sous tension (rupture sous contrainte).

L'art antérieur divulgue des couches antichoc de diverses natures. Ainsi les brevets japonais 6314001 et 6387223 décrivent une couche primaire antichoc à base de résine de polyuréthane thermoplastique.

Le brevet US 5015523, quant à lui, préconise l'emploi de primaires antichocs acryliques, cependant que le brevet européen EP-0404111 décrit l'utilisation de primaires antichocs à base de polyuréthane thermodurcissable.

Le document US 5316791 décrit l'utilisation d'une couche de primaire antichoc formée à partir d'une dispersion aqueuse de polyuréthane appliquée directement sur une surface de substrat en verre organique. La couche de primaire antichoc peut être obtenue par séchage et durcissement à l'air d'une dispersion aqueuse ou latex d'un polyuréthane pouvant éventuellement contenir une émulsion acrylique anioniquement stabilisée.

Bien que ces couches de primaire antichoc de l'art antérieur assurent à la fois une adhésion acceptable du revêtement dur antiabrasion et une certaine résistance aux chocs, cette dernière n'est pas suffisante pour les applications visées.

On a maintenant trouvé qu'il était possible d'améliorer la résistance aux chocs de matériaux composites en utilisant pour la couche de primaire antichoc un agrégat de particules structurées multiphasiques dont une des phases est formée par un polymère ayant un caractère mou et une autre phase est formée par un polymère ayant un caractère dur, ces phases ayant des températures de transition vitreuse situées dans des domaines déterminés.

Selon l'invention, on réalise un matériau composite multicouche comprenant un substrat, au moins une couche de primaire antichoc déposée sur au moins une des faces du substrat, et au moins une couche de revêtement antiabrasion déposée sur la couche de primaire, caractérisé par le fait que ladite couche de primaire comprend un agrégat de particules multiphasiques de polymères, chaque particule comprenant deux phases distinctes :
- une première phase formée par un polymère P1 à caractère mou ayant une température de transition vitreuse (Tg1) inférieure à 20°C, et
- une deuxième phase formée par un polymère P2 à caractère dur ayant une température de transition vitreuse (Tg2) supérieure à 50°C.

De préférence, les particules sont biphasiques et possèdent une structure coeur/écorce.

De préférence, le coeur contient le polymère P1 et l'écorce contient le polymère P2.

De préférence, également, le polymère P1 a une Tg1 inférieure à 0°C et le polymère P2 a une Tg2 supérieure à 60°C.

De préférence encore, le polymère P1 est dispersé sous la forme de nodules dans une matrice formée par le polymère P2.

De préférence, le polymère P1 a une hydrophobicité supérieure à celle du polymère P2.

En général, la couche de primaire antichoc est constituée de 70 à 90 % en poids du polymère P1 à caractère mou et de 10 à 30 % en poids du polymère P2 à caractère dur.

Avantageusement, les polymères P1 et P2 des couches primaires selon l'invention contiennent :
- 90 à 100 % en poids de motifs obtenus par polymérisation d'au moins un monomère choisi dans le groupe (I) constitué par les alkyl(C₁-C₈) esters de l'acide (méth)acrylique tels que le (méth)acrylate de méthyle et le (méth)acrylate de butyle, les esters vinyliques des acides carboxyliques linéaires ou ramifiés tels que l'acétate de vinyle et le stéarate de vinyle, le styrène, les alkylstyrènes tels que l'α-méthylstyrène, les haloalkylstyrènes tels que le chlorométhylstyrène, les diènes conjugués tels que le butadiène et l'isoprène, le (méth)acrylamide, l'acrylonitrile, le chlorure de vinyle, les acides (méth)acryliques et leurs dérivés tels que les anhydrides, et
- 0 à 10 % en poids de motifs obtenus par polymérisation d'au moins un monomère choisi dans le groupe (II) constitué par les esters allyliques d'acides monocarboxyliques ou dicarboxyliques α,β-insaturés tels que l'acrylate d'allyle, le méthacrylate d'allyle et le maléate de diallyle, les diènes conjugués tels que le butadiène et l'isoprène, les poly(méth)acrylates de polyol tels que le diméthacrylate d'éthylèneglycol, le diméthacrylate de 1,3-butylèneglycol, le diacrylate de 1,4-butènediol et le tétraacrylate de pentaérythritol, les polyvinyl benzènes tels que le divinylbenzène ou le trivinylbenzène et les dérivés polyallyliques tels que le cyanurate de triallyle et le trimésate de triallyle.

Les monomères du groupe (II) agissent comme agents de réticulation dans les polymères P1 et P2.

En général, le polymère P1 à caractère mou est constitué majoritairement de motifs provenant de la polymérisation d'au moins un monomère choisi parmi l'acrylate de butyle, le butadiène et l'isoprène, cependant que le polymère P2 à caractère dur est généralement majoritairement constitué de motifs provenant de la polymérisation d'au moins un monomère choisi parmi le méthacrylate de méthyle, le styrène et le chlorure de vinyle et l'acide méthacrylique.

Dans le cas d'une structure coeur/écorce, de préférence seul le coeur est réticulé, les monomères réticulants préférés étant le butadiène et le diacrylate de butanediol-1,4, et la teneur en monomères réticulants étant comprise entre 0 et 10 % en poids, par rapport au poids total des particules et de préférence entre 0 et 2%.

Le polymère P2 dur peut être greffé directement sur le polymère P1 ou par l'introduction sur ce dernier de restes de motifs monomères. Ces restes de motifs monomères sont obtenus par l'incorporation dans le polymère P1 mou, de monomères greffants choisis parmi les diènes conjugués, les restes de motifs monomères résultant de l'incorporation partielle en 1,2 du diène lors de la polymérisation, soit parmi les esters allyliques d'acides carboxyliques ou dicarboxyliques ,-insaturés, qui possèdent deux fonctions copolymérisables de réactivités différentes.

Les monomères greffants préférés selon l'invention sont le butadiène, le méthacrylate d'allyle et le maléate de diallyle.

Les polymères P1 et P2 selon l'invention peuvent être préparés par polymérisation en émulsion en deux étapes, comme décrit ci-après, à partir des monomères choisis dans le groupe (I) et éventuellement le groupe (II) ci-dessus.

La sélection des monomères tant pour le polymère P1 mou que pour le polymère P2 dur, est conditionnée par des propriétés telles que l'hydrophobie, la température de transition vitreuse, que l'on souhaite conférer aux polymères en question.

La couche de primaire selon l'invention peut être en particulier obtenue à partir d'un latex contenant des particules des polymères P1 et P2, en particulier de polymères P1 et P2 hydrophobes, structurés en coeur/écorce. Lorsque la participation massique de l'écorce dans le poids total des particules de polymères n'excède pas 30 %, le latex appliqué sur une surface d'un substrat en verre organique donne après séchage à basse température, et sans intervention d'agents de coalescence ni de composés organiques volatils, un film continu, structuré sous forme de nodules mous, dispersés dans une matrice dure, homogène, sans collant superficiel et ayant une bonne tenue mécanique.

De manière générale, l'hydrophobie est la non solubilité dans l'eau ou bien l'absence d'affinité vis-à-vis de l'eau. Selon l'invention, cette absence d'affinité peut être hiérarchisée. En effet, l'hydrophobie selon l'invention est définie par le paramètre de solubilité () tel que décrit dans "Properties of polymers" de D.W. Van Krevelen, 1990, 3ème édition, p. 200. Ce paramètre permet de classer les différents polymères selon leurs affinités vis-à-vis de l'eau. Selon l'invention, un polymère est hydrophobe si son () est inférieur à 26. De plus, si (1 )d'un polymère 1 est inférieur à (2) d'un polymère 2, alors 1 est plus hydrophobe que 2.

Un latex convenant pour la réalisation des couches de primaire selon l'invention est un latex ne contenant ni agents de coalescence, ni composés organiques volatils, filmifiant par évaporation à une température inférieure à 40°C et de préférence proche de 25°C, le latex étant à base de particules de polymères hydrophobes structurés en coeur/écorce, et constitués de :
- 70 à 90 % en poids d'au moins un polymère P1 à caractère mou, ayant une Tg inférieure à 20°C, formant le coeur, et de
- 10 à 30 % en poids d'au moins un polymère P2 à caractère dur, ayant une Tg supérieure à 50°C formant l'écorce.

De préférence, le coeur a une Tg1 inférieure à 0°C et l'écorce une Tg2 supérieure à 60°C. De plus, le coeur est généralement plus hydrophobe que l'écorce.

Les latex de l'invention sont préparés en deux étapes, par polymérisation en émulsion d'un mélange de monomères constitué :
- de 90 à 100 % en poids d'au moins un monomère choisi dans le groupe (I) et
- de 0 à 10 % en poids d'au moins un monomère choisi dans le groupe (II).

De manière générale, les latex sont préparés par la polymérisation en émulsion en au moins deux étapes selon les techniques de polymérisation bien connues de l'homme du métier.

La composition du mélange de monomères à polymériser à chaque étape dépend du caractère qu'on souhaite donner aux polymères formés dans cette étape (Tg, hydrophobie).

Selon l'invention, on prépare dans une première étape le polymère P1 à caractère mou et à Tg1 inférieure à 20°C constituant le coeur des particules, ensuite on procède à la préparation du polymère P2 à Tg2 supérieure à 50°C constituant l'écorce à caractère dur.

On notera que pour que les particules soient parfaitement structurées, le mélange de monomères à polymériser pour former le coeur doit être plus hydrophobe que celui à polymériser pour former l'écorce.

Pour chaque étape, la réaction de polymérisation est préférentiellement conduite sous atmosphère inerte en présence d'amorceurs radicalaires. Le système d'amorçage utilisé peut être un système oxydo-réducteur, un système thermique ou peroxydique tel que l'hydroperoxyde de tertio-butyle/bisulfate de sodium ou le di-isopropyl benzène, les quantités utilisées étant comprises entre 0,2 et 1 % en poids par rapport à la masse totale des monomères, préférentiellement entre 0,25 et 0,5 % en poids.

La réaction de polymérisation en émulsion selon l'invention est menée à une température comprise entre 25 et 150°C et est fonction de la nature du système d'amorçage utilisé.

La préparation des dispersions selon l'invention est effectuée de préférence selon un procédé de type semi-continu permettant de limiter les dérives des compositions qui sont fonction des différences de réactivité des différents monomères. L'introduction des monomères soit purs, soit sous forme d'une préémulsion avec une partie de l'eau et des tensio-actifs, est ainsi généralement réalisée sur une période de temps de 3 heures 30 à 5 heures. Il est également utile, bien que non indispensable d'effectuer un ensemencement de 1 à 15 % des monomères. Les systèmes émulsifiants utilisés dans le procédé de polymérisation en émulsion sont choisis dans la gamme des émulsifiants possédant une balance hydrophile/lipophile adaptée. Les systèmes préférés sont constitués par l'association d'un tensio-actif anionique, tels que le laurylsulfate de sodium, les nonylphénols sulfates éthoxylés, en particulier à 20-25 moles d'oxyde d'éthylène, le benzène dodécylsulfonate et les alcools gras éthoxylés sulfates et d'un tensio-actif non-ionique, tel que les nonylphénols éthoxylés, en particulier à 10-40 moles d'oxyde d'éthylène et les alcools gras éthoxylés.

Avantageusement, les substrats ou supports sont choisis parmi :
- les matériaux organiques transparents ou non,
- les verres minéraux.

Parmi les matériaux organiques transparents figurent notamment :
- le poly(méthacrylate de méthyle) et ses copolymères,
- le poly(méthacrylate de méthyle) et ses copolymères renforcés au choc,
- les polycarbonates,
- les copolymères styrène/acrylonitrile,
- le polystyrène et ses copolymères,
- les polyesters de type PET ou PET G,
- les copolymères cyclooléfiniques.
- le poly(chlorure de vinyle) et ses copolymères,

Parmi les matériaux organiques non transparents figurent notamment :
- le poly(fluorure de vinylidène) et ses copolymères,
- les polystyrènes choc,
- les ABS,
- ou leurs alliages à base d'un des polymères ci-dessus.

Avantageusement, le substrat est en poly(méthylméthacrylate) renforcé choc ou en dé ses copolymères renforcés choc, par exemple un poly(méthacrylate de méthyle) ou un de ses copolymères contenant au mois 10% en poids d'additif choc de type dur/mou/dur préparé selon US-A-2159882 ou de type mou/dur préparé selon US -A- 2092389.

Avantageusement, le substrat est en polycarbonate.

Les verres minéraux ou organiques sont généralement ceux utilisés pour les lentilles et/ou le vitrage. Parmi eux on peut citer les substrats obtenus par polymérisation des méthacrylates d'alkyle, en particulier des méthacrylates d'alkyle en C1-C4, tels que le méthyl(méth)acrylate et l'éthyl(méth)acrylate, les dérivés allyliques tels que les allyl carbonates de polyols aliphatiques ou aromatiques, linéaires ou ramifiés, les thio(méth)acryliques, les thiouréthanes, les (méth)acrylates aromatiques polyéthoxylés tels que les bisphénolates diméthacrylates polyéthoxylés.

Parmi les substrats recommandés, on peut citer des substrats obtenus par polymérisation des allyl carbonates de polyols parmi lesquels on peut mentionner l'éthylèneglycol bis allyl carbonate, le diéthylène glycol bis 2-méthyl carbonate, le diéthylèneglycol bis (allyl carbonate), l'éthylèneglycol bis (2-chloro allyl carbonate), le triéthylèneglycol bis (allyl carbonate), le 1,3-propanediol bis (allyl carbonate), le propylène glycol bis (2-éthyl allyl carbonate), le 1,3-butènediol bis (allyl carbonate), le 1,4-butènediol bis (2-bromo allyl carbonate), le dipropylèneglycol bis (allyl carbonate), le triméthylèneglycol bis (2-éthyl allyl carbonate), le pentaméthylène glycol bis (allyl carbonate), l'isopropylène bis phénol-A bis (allyl carbonate).

Les polymères acryliques peuvent aussi être des copolymères formés à partir de méthacrylate de méthyle et de comonomères tels que acide (méth)acrylique, (méth)acrylates d'alkyle, (méth)acrylates d'hydroxyalkyle, (méth)acrylates d'alkoxyalkyle dans lesquels le groupe alkyle est, par exemple, de 1 à 8 atomes de carbone, (méth)acrylonitrile, (méth)acrylamide, maléimide, anhydride maléique, styrène substitué ou non, diène comme le butadiène. Comme substrat pouvant être traité selon l'invention, on peut citer aussi les (co)polymères précédents imidés, par exemple des polymères à groupes glutarimides ; les copolymères imidés peuvent aussi comprendre des groupes méthacrylate de méthyle, acide méthacrylique, anhydride glutarique et, éventuellement, méthacrylamide, les groupes amide et imide pouvant porter des substituants identiques ou différents dans la même chaîne.

La présente invention concerne aussi :
- les vitrages bâtiments et automobiles,
- les phares automobiles,
- le matériel sanitaire notamment les bacs de douches, les lavabos, les baignoires,
comprenant les matériaux composites selon la présente invention tels que décrits précédemment.

Pour réaliser l'invention on procède comme décrit dans les exemples, qui illustrent l'invention sans en limiter la portée.

### EXEMPLES

### Exemple 1 : préparation d'un latex selon l'invention

On opère dans un réacteur de 5 litres équipé d'un agitateur, d'une prise de température et d'une double enveloppe parcourue par un fluide caloporteur pour le maintien du réacteur en température.

Dans ce réacteur, maintenu à température ambiante, et sous agitation, on introduit après avoir effectué un dégazage à l'azote, 1500 g d'eau déminéralisée et 4,8 g de phosphate disodique, puis on dissout dans ce milieu 40,05 g de lauryl sulfate de sodium à titre d'agent émulsifiant.

On porte ensuite la température du contenu du réacteur à 57°C et, tout en maintenant cette température, on ajoute alors simultanément audit contenu 991,75 g d'acrylate de n-butyle et 9,2 g de diacrylate de butanediol-1,4.

On amène la température du réacteur à 66°C et on ajoute au milieu réactionnel 1,3 g de persulfate de potassium dissous dans 12,5 g d'eau et 0,925 g de bisulfite de sodium dissous dans 35 g d'eau.

Après un temps d'induction d'environ 15 minutes, la température s'élève à 107°C.

Après cet exotherme, on ajoute dans le réacteur maintenu à 80°C un mélange constitué de 98,9 g d'acrylate de n-butyle et 5,48 g de maléate de diallyle, puis 0,15 g de persulfate de potassium dissous dans 25 g d'eau. On maintient la température à 80°C pendant une heure. On obtient, avec une conversion de 97 % le noyau élastomérique constitué de particules de latex de diamètre Coulter 77 nm.

Au milieu réactionnel précédemment obtenu, maintenu à 80°C, on ajoute, sous agitation, 1 g de sulfoxylate formaldéhyde de sodium dans 5 g d'eau. On ajoute ensuite sur une période de une heure 279,9 g de méthacrylate de méthyle, et d'autre part 0,825 g de diisopropylbenzene hydroperoxyde dans 275 g d'eau.

Le contenu du réacteur est maintenu à 80°C pendant 1,5 heure, après le début de l'addition de méthacrylate de méthyle, et on ajoute audit contenu 0,5 g d'hydroperoxyde de tertiobutyle et 0,175 g de bisulfite de sodium dans 10 g d'eau.

Le mélange réactionnel est ensuite maintenu à 80°C pendant une heure. Au bout de cette durée, le contenu du réacteur est refroidi à température ambiante.

On obtient avec une conversion de 96,4 % un latex du copolymère greffé, dont le diamètre moyen de particule est de 85 nm et l'extrait sec de 39,9 %. L'analyse du polymère obtenu montre qu'il a 2 Tg, l'une située à -38°C, l'autre à 105°C.

### Exemple 2 : préparation de vitrage fixe ou custode de voiture

La custode est obenue par thermoformage d'une plaque de polyméthacrylate de méthyle (PMMA) renforcée au choc d'épaisseur 6 mm (réf. EI5O).

Cette plaque thermoformée est découpée au format du futur vitrage.
1. On dépose par revêtement par trempage le latex BA252 sur une plaque thermoformée, suivant le mode opératoire suivant :
   Utilisation d'une solution du latex de l'exemple 1 à 39,9 %.
   Immersion totale de l'échantillon dans cette solution puis émersion de celui-ci à une vitesse de 254 mm/mn.
   1er séchage à température ambiante du film pendant 20 mn.
   2ème séchage dans une étuve ventilée à 60°C pendant 30 mn.
2. Le revêtement antiabrasion est ensuite déposé sur l'échantillon revêtu du latex par le même procédé de dépôt :
   Utilisation du vernis thermoréticulable de traitement antiabrasion SILVUE 101 de la Société SDC Coating.
   Immersion totale de l'échantillon dans ce vernis puis émersion de celui-ci à une vitesse de 254 mm/mn.
   Séchage du vernis 30 mn à température ambiante.
   Thermoréticulation à 85°C pendant 4 h.

On évalue les propriétés mécaniques d'un échantillon découpé aux dimensions requises pour le test FWI (falling weight impact) référence norme ISO 6603-1, NF EN 26603-1.

On mesure l'énergie totale nécessaire à la rupture de l'échantillon appelée ET. Les résultats sont comparés aux valeurs obtenues avec un échantillon EI5O nu (sans latex, ni vernis antiabrasion) et avec un échantillon EI5O revêtu du même vernis antiabrasion mais sans latex (exemple 1).

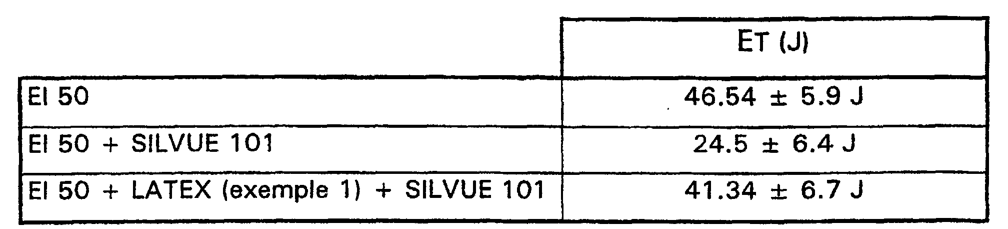

On note une diminution sensible de la tenue au choc de la pièce après dépôt du vernis antiabrasion.

La présence de latex (exemple 1) entre la pièce et le vernis permet de rétablir les performances initiales de la pièce nue.

### Exemple 3 relatif à la rupture sous contrainte

Les méthodes de dépôt du latex (exemple 1) et du vernis antiabrasion SILVUE 101 sont celles décrites dans l'exemple précédent, à ceci près que la concentration en latex est ici égale à 19 %.

La propriété de résistance à la rupture sous contrainte vis-à-vis d'un mélange d'alcool méthylique et d'alcool éthylique (en proportion 1 partie pour 10 parties) est évaluée selon l'essai UTAC, référence à l'arrêté ministériel du 20 juin 1983 relatif aux vitrages des véhicules p. 6959 - 6960.

Nous avons comparé un échantillon PMMA El 50 d'épaisseur 6 mm, sans latex ni vernis, un échantillon PMMA El 50 revêtu du vernis antiabrasion et un échantillon revêtu de deux couches, une couche intermédiaire de latex BA252 et une couche supérieure de vernis antiabrasion.

Sur l'échantillon El 50 nu, des craquelures apparaissent. Sur l'échantillon El 50 revêtu uniquement de vernis, des craquelures apparaissent avec un certain retard par rapport au cas précédent.

Sur l'échantillon El 50 revêtu du latex BA252 et du vernis antiabrasion, aucune craquelure n'est observée.

## Revendications

1. Matériau composite multicouche comprenant un substrat, au moins une couche de primaire antichoc déposée sur au moins une des faces du substrat, et au moins une couche de revêtement antiabrasion déposée sur la couche de primaire, **caractérisé par le fait que** ladite couche de primaire est constitué d'un polymère P1 dispersé sous la forme de nodules dans une matrice formée par un polymère P2, ladite couche étant obtenue à partir de particules multiphasiques de polymères, chaque particule comprenant deux phases distinctes :
- une première phase formée par le polymère P1 à caractère mou ayant une température de transition vitreuse (Tg1) inférieure à 20°C, et
- une deuxième phase formée par le polymère P2 à caractère dur ayant une température de transition vitreuse (Tg2) supérieure à 50°C.

2. Matériau composite selon la revendication 1, **caractérisé par le fait que** les particules sont biphasiques et possèdent une structure coeur/écorce.

3. Matériau composite selon la revendication 2, **caractérisé par le fait que** le coeur contient le polymère P1 et l'écorce contient le polymère P2.

4. Matériau composite selon l'une des revendications 1 à 3, **caractérisé par le fait que** le polymère P1 a une Tg1 inférieure à 0°C et le polymère P2 a une Tg2 supérieure à 60°C.

5. Matériau composite selon l'une des revendications 1 à 4, **caractérisé par le fait que** le polymère P1 représente 70 à 90 % en poids des particules et le polymère P2 représente de 10 à 30 % en poids des particules.

6. Matériau composite selon l'une des revendications 1 à 5, **caractérisé par le fait que** le polymère P1 a une hydrophobicité supérieure à celle du polymère P2.

7. Matériau composite selon l'une des revendications 1 à 6, **caractérisé par le fait que** les polymères P1 et P2 contiennent:
- 90 à 100 % en poids de motifs obtenus par polymérisation d'au moins un monomère choisi dans le groupe (I) constitué par les alkyl(C₁-C₈) esters de l'acide (méth)acrylique, les esters vinyliques des acides carboxyliques linéaires ou ramifiés, le styrène, les alkylstyrènes, les haloalkylstyrènes, les diènes conjugués, le (méth)acrylamide, l'acrylonitrile, le chlorure de vinyle, les acides (méth)acryliques et leurs dérivés, et
- 0 à 10 % en poids de motifs obtenus par polymérisation d'au moins un monomère choisi dans le groupe (II) constitué par les esters allyliques d'acides monocarboxyliques ou dicarboxyliques α-β insaturés, les diènes conjugués, les (méth)acrylates de polyols, les polyvinyl-benzènes et les dérivés polyallyliques.

8. Matériau composite selon la revendication 7, **caractérisé par le fait que** :
- pour le polymère P1, les monomères sont choisis, pour les monomères de groupe (I), parmi l'acrylate d'éthyle, l'acrylate de butyle, le butadiène, le méthacrylate de butyle et le méthacrylate de méthyle, pour les monomères du groupe (II), parmi le diacrylate de buténediol-1,4, le butadiène, le diacrylate d'éthylèneglycol, le maléate de diallyle et le méthacrylate d'allyle, et
- pour le polymère P2, les monomères sont choisis exclusivement parmi les monomères du groupe (I), comprenant le méthacrylate de méthyle, le méthacrylate de butyle et l'acide méthacrylique.

9. Matériau composite selon l'une des revendications 1 à 8, **caractérisé par le fait que** le substrat est choisi parmi :
- les matériaux organiques transparents ou non
- les verres minéraux.

10. Matériau composite selon la revendication 9, **caractérisé par le fait que** le substrat est en poly(méthylméthacrylate) ou ses copolymères renforcés au choc.

11. Matériau composite selon la revendication 9, **caractérisé par le fait que** le substrat est en polycarbonate.

12. Vitrage bâtiment comprenant le matériau composite selon l'une des revendications 9 à 11.

13. Vitrage automobile comprenant le matériau composite selon l'une des revendications 9 à 11.

14. Phares automobile comprenant le matériau composite selon l'une des revendications 9 à 11.

15. Matériel sanitaire comprenant le matériau composite selon l'une des revendications 9 à 11.

## Patentansprüche

1. Mehrschichtiger Verbundwerkstoff, der ein Substrat, mindestens eine schlagfeste Grundierung, die auf mindestens einer Substratoberfläche aufgebracht ist, und mindestens eine abriebfeste, auf der Grundierung aufgebrachte Deckschicht umfasst, **dadurch gekennzeichnet, dass** die Grundierung aus einem Polymer P1 besteht, das in Form von Knöllchen in einer Matrix dispergiert ist, die aus einem Polymer P2 gebildet wird, wobei die Grundierung aus mehrphasigen Polymerpartikeln hergestellt wird, wobei die Partikel jeweils zwei unterschiedliche Phasen aufweisen:
- eine erste Phase, die aus dem Polymer P1 mit weichem Charakter gebildet wird, das eine Glasübergangstemperatur (Tg1) unter 20° C aufweist, und
- eine zweite Phase, die aus dem Polymer P2 mit hartem Charakter gebildet wird, das eine Glasübergangstemperatur (Tg2) über 50° C aufweist.

2. Verbundwerkstoff nach Anspruch 1, **dadurch gekennzeichnet, dass** die Partikel zweiphasig sind und eine Kern/Schale-Struktur besitzen.

3. Verbundwerkstoff nach Anspruch 2, **dadurch gekennzeichnet, dass** der Kern das Polymer P1 und die Schale das Polymer P2 enthält.

4. Verbundwerkstoff nach einem der Ansprüche 1 bis 3, **dadurch gekennzeichnet, dass** das Polymer P1 eine Tg1 unter 0° C und das Polymer P2 eine Tg2 über 60° C aufweist.

5. Verbundwerkstoff nach einem der Ansprüche 1 bis 4, **dadurch gekennzeichnet, dass** das Polymer P1 70 bis 90 Gew.-% der Partikel und das Polymer P2 10 bis 30 Gew.-% der Partikel ausmacht.

6. Verbundwerkstoff nach einem der Ansprüche 1 bis 5, **dadurch gekennzeichnet, dass** das Polymer P1 hydrophober als das Polymer P2 ist.

7. Verbundwerkstoff nach einem der Ansprüche 1 bis 6, **dadurch gekennzeichnet, dass** die Polymere P1 und P2 enthalten:
- 90 bis 100 Gew.-% Einheiten, die durch Polymerisation mindestens eines Monomers hergestellt werden, das aus der Gruppe (I) ausgewählt ist, welche aus C₁₋₈-Alkylestern von (Meth)acrylsäure, Vinylestern von geradkettigen oder verzweigten Carbonsäuren, Styrol, Alkylstyrolen, Haloalkylstyrolen, konjugierten Dienen, (Meth)acrylamid, Acrylnitril, Vinylchlorid, (Meth)acrylsäure und deren Derivaten besteht, und
- 0 bis 10 Gew.-% Einheiten, die durch Polymerisation mindestens eines Monomers hergestellt werden, das aus der Gruppe (II) ausgewählt ist, welche aus Allylestern von α-β-ungesättigten Monocarbonsäuren oder Dicarbonsäuren, konjugierten Dienen, (Meth)acrylaten von Polyolen, Polyvinylbenzolen und Polyallylderivaten besteht.

8. Verbundwerkstoff nach Anspruch 7, **dadurch gekennzeichnet, dass**:
- für das Polymer P1 die Monomere für die Monomere der Gruppe (I) unter Ethylacrylat, Butylacrylat, Butadien, Butylmethacrylat und Methylmethacrylat und für die Monomere der Gruppe (II) unter 1,4-Butandioldiacrylat, Butadien, Ethylenglykoldiacrylat, Diallylmaleat und Allylmethacrylat ausgewählt sind, und
- für das Polymer P2 die Monomere ausschließlich unter den Monomeren der Gruppe (I) ausgewählt sind, die Methylmethacrylat, Butylmethacrylat und Methacrylsäure umfasst.

9. Verbundwerkstoff nach einem der Ansprüche 1 bis 8, **dadurch gekennzeichnet, dass** das Substrat ausgewählt ist unter:
- den transparenten oder nicht transparenten organischen Materialien, und
- den anorganischen Gläsern.

10. Verbundwerkstoff nach Anspruch 9, **dadurch gekennzeichnet, dass** das Substrat aus Poly(methylmethacrylat) oder seinen Copolymeren besteht, welche schlagfest gemacht wurden.

11. Verbundwerkstoff nach Anspruch 9, **dadurch gekennzeichnet, dass** das Substrat aus Polycarbonat besteht.

12. Gebäudeverglasung, die den Verbundwerkstoff nach einem der Ansprüche 9 bis 11 enthält.

13. Kraftfahrzeugverglasung, die den Verbundwerkstoff nach einem der Ansprüche 9 bis 11 enthält.

14. Kraftfahrzeugscheinwerfer, die den Verbundwerkstoff nach einem der Ansprüche 9 bis 11 enthalten.

15. Sanitärprodukt, das den Verbundwerkstoff nach einem der Ansprüche 9 bis 11 enthält.

## Claims

1. Multilayer composite material comprising a substrate, at least one impact-resistant primer layer deposited on at least one of the faces of the substrate, and at least one abrasion-resistant coating layer deposited on the primer layer, **characterized in that** the said primer layer consists of a polymer P1 dispersed in the form of nodules in a matrix formed by a polymer P2, the said layer being obtained from multiphase polymer particles, each particle comprising two separate phases:
- a first phase formed by the polymer P1 with a soft character having a glass transition temperature (T_{g}1) below 20°C; and
- a second phase formed by the polymer P2 with a hard character having a glass transition temperature (T_{g}2) above 50°C.

2. Composite material according to Claim 1, **characterized in that** the particles are two-phase particles and possess a core/shell structure.

3. Composite material according to Claim 2, **characterized in that** the core contains the polymer P1 and the shell contains the polymer P2.

4. Composite material according to one of Claims 1 to 3, **characterized in that** the polymer P1 has a T_{g}1 below 0°C and the polymer P2 has a T_{g}2 above 60°C.

5. Composite material according to one of Claims 1 to 4, **characterized in that** the polymer P1 represents 70 to 90% by weight of the particles and the polymer P2 represents from 10 to 30% by weight of the particles.

6. Composite material according to one of Claims 1 to 5, **characterized in that** the polymer P1 has a hydrophobicity greater than that of the polymer P2.

7. Composite material according to one of Claims 1 to 6, **characterized in that** the polymers P1 and P2 contain:
- 90 to 100% by weight of units obtained by the polymerization of at least one monomer chosen from the group (I) consisting of (C₁-C₈) alkyl esters of (meth)acrylic acid, vinyl esters of linear or branched carboxylic acids, styrene, alkylstyrenes, haloalkylstyrenes, conjugated dienes, (meth)acrylamide, acrylonitrile, vinyl chloride, (meth)acrylic acids and their derivatives; and
- 0 to 10% by weight of units obtained by the polymerization of at least one monomer chosen from the group (II) consisting of allyl esters of α-β-unsaturated monocarboxylic or dicarboxylic acids, conjugated dienes, (meth)acrylates of polyols, polyvinylbenzenes and polyallyl derivatives.

8. Composite material according to Claim 7, **characterized in that**:
- for the polymer P1, the monomers are chosen, in the case of the monomers of group (I), from ethyl acrylate, butyl acrylate, butadiene, butyl methacrylate and methyl methacrylate and, in the case of the monomers of the group (II), from 1,4-butenediol diacrylate, butadiene, ethylene glycol diacrylate, diallyl maleate and allyl methacrylate and
- for the polymer P2, the monomers are chosen exclusively from the monomers of the group (I), these comprising methyl methacrylate, butyl methacrylate and methacrylic acid.

9. Composite material according to one of Claims 1 to 8, **characterized in that** the substrate is chosen from:
- transparent or non-transparent organic materials;
- mineral glasses.

10. Composite material according to Claim 9, **characterized in that** the substrate is made of impact-modified poly(methyl methacrylate) or its copolymers.

11. Composite material according to Claim 9, **characterized in that** the substrate is made of polycarbonate.

12. Building window comprising the composite material according to one of Claims 9 to 11.

13. Motor-vehicle windows comprising the composite material according to one of Claims 9 to 11.

14. Motor-vehicle headlights comprising the composite material according to one of Claims 9 to 11.

15. Sanitaryware comprising the composite material according to one of Claims 9 to 11.
